# EUROPEAN PATENT APPLICATION

(11) **EP 4 492 764 A1**
(43) Date of publication of application: **15.01.2025**
(21) Application number: 22930910.9
(22) Date of filing: 11.03.2022

(54) **MOBILE INFORMATION TERMINAL AND IMAGE DISPLAYING METHOD USED THEREIN**

(71) Applicant: Maxell, Ltd., Kyoto 618-8525 (JP)
(72) Inventor: NAKADE Mayumi, Otokuni-gun, Kyoto 618-8525 (JP); YOSHIDA Susumu, Otokuni-gun, Kyoto 618-8525 (JP); HASHIMOTO Yasunobu, Otokuni-gun, Kyoto 618-8525 (JP); SHIOKAWA Junji, Otokuni-gun, Kyoto 618-8525 (JP)
(74) Representative: Mewburn Ellis LLP
(86) International application number: PCT/JP2022/010922
(87) International publication number: WO 2023/170929

(57) **Abstract**

To provide an easy-to-use mobile information terminal capable of reducing a deviation of a line of sight of a user even in a mobile information terminal in which a camera is embedded in a display. To accomplish the object, there is provided a mobile information terminal comprising a display, an imager embedded in the display, and a controller. The controller is configured to display a predetermined image at a position on the display which corresponds to a position of the imager.

## Description

### TECHNICAL FIELD

The present invention relates to a mobile information terminal, and particularly to, a mobile information terminal capable of reducing a deviation of a line of sight of a user.

### BACKGROUND ART

As a background art of this technical field, Patent Document 1 is exemplified. In Patent Document 1, in order to provide a technology for coping with a deviation of a line of sight of a subject when taking a selfie in a camera-equipped information processing apparatus, the apparatus is configured to allow a user to check an input image on a display when taking a selfie, and with regard to a display position of an image acquired by the camera, the input image is displayed in conformity to a position of the camera rather than a central region of the display region on the basis of the position of the camera with respect to a display region of the display. In addition, in a case where the distance is relatively short depending on a distance from a user, the information processing apparatus reduces the input image and displays the input image at a position closer to the camera. According to this, it is possible to allow the line of sight of the user to be brought closer to the camera.

### CITATION LIST

### PATENT DOCUMENT

Patent Document 1: JP 2014-127830 A

### SUMMARY OF THE INVENTION

### PROBLEMS TO BE SOLVED BY THE INVENTION

In Patent Document 1, it is assumed that an inner camera is disposed in the vicinity (bezel) of the display in the information processing apparatus such as a smartphone and a tablet terminal. Here, the configuration in which the inner camera is disposed at the bezel portion is employed in a case where a screen size is small, and a bold bezel surrounding the screen exists. However, in a mobile information terminal such as the smartphone conforming to user's needs, due to an increase in screen size and narrowing of the bezel according to technological innovation, there is no space to place the inner camera.

Here, in recent years, an under display inner camera in which a camera is embedded on a rear side of a display element has been developed by using a highly transparent special material for a display screen, devising an arrangement of the display element that constitutes the display screen, and adding software processing. In a case of the configuration in which the camera is embedded in the display screen, there is a problem that it is difficult for a user to determine a position of the camera, the user does not know where to look on the smartphone when taking a picture of the user, so-called taking a selfie, and it is difficult to take a picture at an appropriate line of sight with the technology described in Patent Document 1.

The invention has been made in consideration of such circumstances, and an object thereof is to provide an easy-to-use mobile information terminal capable of reducing a deviation of a line of sight of a user even when the mobile information terminal has a configuration in which a camera is embedded in a display screen.

### SOLUTIONS TO PROBLEMS

An example of the invention is a mobile information terminal comprising a display, an imager embedded in the display, and a controller. The controller is configured to display a predetermined image at a position on the display which corresponds to a position of the imager.

### EFFECTS OF THE INVENTION

According to the invention, even in the mobile information terminal having a configuration in which the camera is embedded in the display screen, a deviation of a line of sight of a user can be reduced, and an easy-to-use mobile information terminal can be provided.

### BRIEF DESCRIPTION OF THE DRAWINGS

Fig. 1 is a functional block diagram of a mobile information terminal in Example 1.
Fig. 2 is a structure view of the mobile information terminal in Example 1.
Fig. 3A is a display example when taking a selfie with the mobile information terminal in Example 1.
Fig. 3B is another display example when taking a selfie with the mobile information terminal in Example 1.
Fig. 4A is a view illustrating a display example when taking a selfie with a mobile information terminal in Example 2.
Fig. 4B is a view illustrating results of the display example when taking a selfie with the mobile information terminal in Example 2.
Fig. 5 is a flowchart of display control when an inner camera is selected in the mobile information terminals in Example 1 and Example 2.
Fig. 6A is a display example when taking a selfie with a mobile information terminal in Example 3.
Fig. 6B is another display example when taking a selfie with the mobile information terminal in Example 3.
Fig. 7 is a flowchart of display control when an inner camera is selected in the mobile information terminal in Example 3.
Fig. 8 is a display example when taking a selfie with a mobile information terminal in Example 4.
Fig. 9A is a display example of a partner image during communication in a mobile information terminal in Example 5.
Fig. 9B is another display example of a partner image during communication in the mobile information terminal in Example 5.
Fig. 10 is a control flowchart of displaying a partner image during communication with the mobile information terminal in Example 5.
Fig. 11A is a display example of a partner image during communication of a mobile information terminal in Example 6.
Fig. 11B is another display example of a partner image during communication in the mobile information terminal in Example 6.
Fig. 12 is a control flowchart for displaying a partner image during communication with the mobile information terminal in Example 6.
Fig. 13 is a display example of a partner image during communication in a mobile information terminal in Example 7.
Fig. 14A is a display example of images of a communication partner and a communication source in a mobile information terminal in Example 8.
Fig. 14B is another display example of the images of the communication partner and the communication source in the mobile information terminal in Example 8.
Fig. 15 is a structure view of an under display inner camera (in-camera) of a mobile information terminal in Example 9.
Fig. 16A is a display example when taking a selfie with the mobile information terminal in Example 9.
Fig. 16B is another display example when taking a selfie with the mobile information terminal in Example 9.
Fig. 17 is a structure view of an under display inner camera of a mobile information terminal in Example 10.
Fig. 18 is a view illustrating a lock screen of the mobile information terminal in Example 10.
Fig. 19A is a display example of a mobile information terminal in Example 11.
Fig. 19B is another display example of the mobile information terminal in Example 11.
Fig. 20 is a display example when a camera application of a mobile information terminal in Example 12 is activated.
Fig. 21A is a display example of guidance display in an ID photo mode when taking a selfie with a mobile information terminal in Example 13.
Fig. 21B is a view illustrating a positional relationship between a user and the mobile information terminal in the ID photo mode in Example 13.
Fig. 21C is a view illustrating a state in which a user's face and the mobile information terminal face each other in the ID photo mode in Example 13.
Fig. 22A is a display example of guidance display in an upturned eye mode when taking a selfie with the mobile information terminal in Example 13.
Fig. 22B is another display example of the guidance display in the upturned eye mode in Example 13.
Fig. 22C is another display example of the guidance display in the upturned eye mode in Example 13.
Fig. 23 is a display example of the guidance display in a background mode when taking a selfie with the mobile information terminal in Example 13.
Fig. 24 is a display example of the guidance display in a line-of-sight shift mode when taking a selfie with the mobile information terminal in Example 13.
Fig. 25 is a flowchart for controlling a display image in correspondence with a selfie mode with the mobile information terminal in Example 13.

### MODE FOR CARRYING OUT THE INVENTION

Hereinafter, examples of the invention will be described with reference to the accompanying drawings.

### Example 1

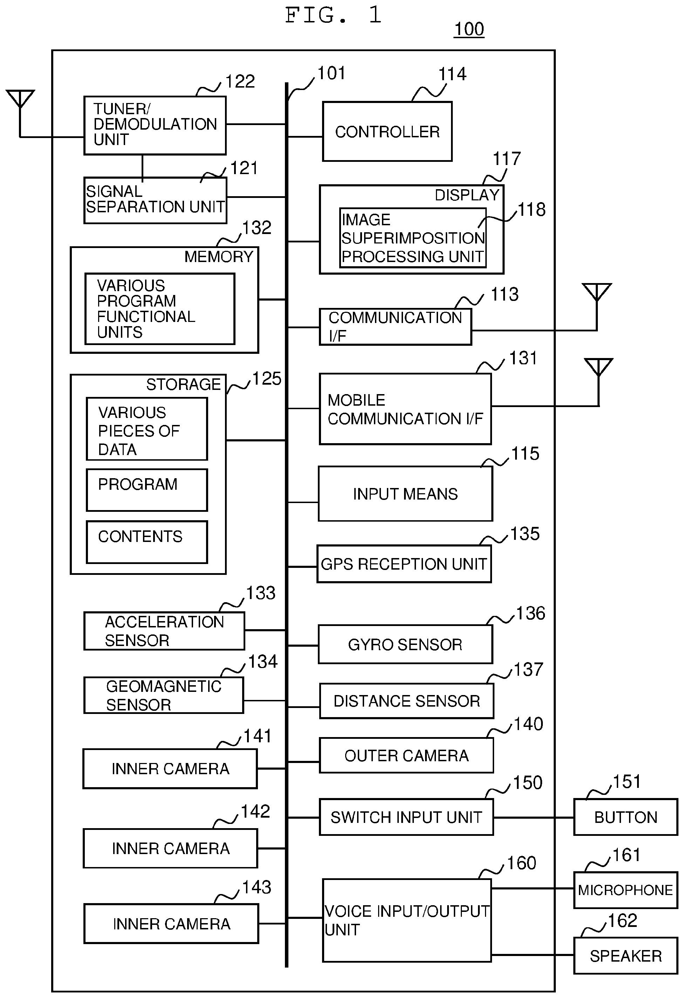

Fig. 1 is a functional block configuration diagram of a mobile information terminal according to an example. Examples of the mobile information terminal in this example include a tablet and a smartphone.

As illustrated in Fig. 1, a mobile information terminal 100 includes a communication interface (communication I/F) 113, a controller 114, a display 117, a button 151, a microphone 161, a speaker 162, a signal separation unit 121, a tuner/demodulation unit 122, a storage 125, a mobile communication interface (mobile communication I/F) 131, a memory 132, an acceleration sensor 133, a geomagnetic sensor 134, a GPS reception unit 135, a gyro sensor 136, a distance sensor 137, an outer camera 140 that is an imager, an inner camera 141 that is also an imager, an inner camera 142, an inner camera 143, a switch input unit 150, and a voice input/output unit 160. In addition, respective functional units excluding the button 151, the microphone 161, and the speaker 162 are connected to each other via a bus 101.

The storage 125 stores application programs, and the controller 114 develops the application programs from the storage 125 to the memory 132, the controller 114 executes the developed application programs to realize various functions. In the following description, for simplicity, description will be given on the assumption that the various functions realized by executing respective application programs by the controller 114 are mainly realized by various program function units.

Note that, the application programs may be stored in advance in the storage 125 before the mobile information terminal 100 is shipped, or may be stored in a medium such as an optical medium such as a compact disk (CD) or a digital versatile disk (DVD), a semiconductor memory, or the like, and may be installed in the mobile information terminal 100 via a medium connection unit (not illustrated).

In addition, the application programs may be downloaded from an external network (not illustrated) via the communication I/F 113 and a wireless router (not illustrated) to be installed. Alternatively, the application programs may be downloaded from a distribution source through a base station (not illustrated) via the mobile communication I/F 131 to be installed.

Furthermore, the mobile information terminal 100 can be connected to a personal computer that has acquired the application programs through a network via an external device connection interface (not illustrated), and the application programs can be moved or copied from the personal computer to the mobile information terminal 100 to be installed.

In addition, the application programs can also be realized by hardware as processing units having similar functions. In a case of being realized by the hardware, respective processing units mainly realize respective functions.

The communication I/F 113 is, for example, a short-range wireless transceiver or a wireless local area network (LAN) communication device, and is connected to a wireless router (not illustrated). In addition, the communication I/F 113 may be connected to an external network via the wireless router to transmit and receive information to and from a server on the external network or the like. Note that, the communication I/F 113 may be a terminal for establishing wired communication connection, for example, a USB terminal.

The communication I/F 113 may be implemented with chips which execute different communication methods, respectively. In addition, the communication I/F 113 may be implemented as one chip that handles a plurality of communication methods. In addition, as the short-range wireless transceiver, communication devices suitable for a wireless LAN communication method such as Bluetooth (registered trademark), IrDA (Infrared Data Association, registered trademark), Zigbee (registered trademark), Home RF (Home Radio Frequency, registered trademark), or Wi-Fi (registered trademark) may be used.

The mobile communication I/F 131 is connected to a communication network through a base station by using a mobile communication network such as a fourth-generation communication system such as a long term evolution (LTE) method, and a fifth-generation communication system to transmit and receive information to and from a server on the communication network. In addition, terminals can also share locations thereof with each other.

In addition, connection with an external network by the communication I/F 113 can be given priority over communication network connection by the mobile communication I/F 131.

The controller 114 receives an operation request of a user from the button 151 via the switch input unit 150 or from the microphone 161 via the voice input/output unit 160, and controls the signal separation unit 121, the display 117, the communication I/F 113, and various program functional units.

Furthermore, the controller 114 has a function of acquiring various pieces of information from a server on an external network via the communication I/F 113 and a wireless router, or from the server on the external network via the mobile communication I/F 131 and a base station, and transferring the various pieces of information to various program functional units. It is possible to exchange images and voices with a communication partner by using the function to perform voice chat, video chat, and the like.

The storage 125 is controlled by an instruction given from the controller 114, and can store application programs. In addition, the storage 125 stores various pieces of information created by the application programs.

The storage 125 may store contents such as video/audio stream from signals received from the tuner/demodulation unit 122, the communication I/F 113, or the mobile communication I/F 131. The storage 125 may be built in the mobile information terminal 100, or a portable memory that is detachable from the mobile information terminal 100.

The memory 132 is controlled by an instruction given from the controller 114. Functional units of the application programs stored in the storage 125 are developed to the memory 132 by the controller 114.

The display 117 displays images or videos stored in the storage 125, broadcasted/distributed videos, a UI for various operations, and the like. Note that, the images or the videos to be displayed may be images created by the application programs, images or videos of contents received via the tuner/demodulation unit 122, or images or videos received from a server on an external network via the communication I/F 113. In addition, the images or the videos to be displayed may be images captured by the outer camera 140, the inner camera 141, the inner camera 142, or the like, images or videos received from a television receiver via the communication I/F 113, or images or videos distributed from a server on a communication network via the mobile communication I/F 131. For example, the display 117 may be configured integrally with a touch panel to be described later, or the like.

In addition, the display 117 includes an image superimposition processing unit 118, and the image superimposition processing unit 118 can set image data preprogrammed in the memory 132 in advance from the controller 114, and displays the image data in a state of being superimposed on the various images.

In addition, the display 117 is constituted, for example, by a display element such as a liquid crystal panel or an organic EL, and the inner camera 141, the inner camera 142, or the inner camera 143 to be described later can be disposed on a rear side of the display element.

The button 151 is an input unit that accepts an operation on the mobile information terminal 100 from a user, and inputs control information relating to the input operation.

A drag operation is an operation of moving any object such as an icon on a touch panel while touching the object with a finger. A flick operation is an operation of moving a finger on a screen in a flicking manner.

When performing a tap operation or a double tap operation, an object such as an icon is activated or a screen can be switched to another screen. The tap operation is an operation of tapping the object or the like once with a finger. The double tap operation is an operation of tapping the object or the like twice with a finger. Here, respective operations on the touch panel will be described as the drag operation, the flick operation, and the tap operation.

The tuner/demodulation unit 122 and the signal separation unit 121 perform tuner/demodulation and signal separation of the television receiver, respectively. The acceleration sensor 133 measures acceleration applied to the mobile information terminal 100.

For example, the controller 114 can know which portion of the mobile information terminal 100 is an upper side by measuring gravitational acceleration by using the acceleration sensor 133, and performs display so that an upper side of a screen to be displayed on the display 117 matches the upper side measured by the acceleration sensor 133. According to this, the screen can be displayed in conformity to a manner of holding the mobile information terminal 100 by the user.

The geomagnetic sensor 134 measures geomagnetism by using a plurality of magnetic sensors or the like. The GPS reception unit 135 receives signals transmitted from a plurality of satellites by using a global positioning system (GPS). The controller 114 can calculate position information of the mobile information terminal 100 on the basis of the signals received by the GPS reception unit 135. Note that, the GPS reception unit is an example of a reception unit that is used for position acquisition in a global satellite navigation system, and reception units with different names may be used depending on regions or countries.

The gyro sensor 136 measures acceleration of the mobile information terminal 100 which occurs in a case where the user moves the mobile information terminal 100, and the like.

The distance sensor 137 is a sensor that measures a distance from the mobile information terminal 100 to an object. A sensor that can three-dimensionally estimate a position of the object can be used as the distance sensor 137. Examples of the distance sensor 137 include three-dimensional distance sensors such as a light detection and ranging (LiDAR) method sensor and a time of flight (TOF) method sensor.

The outer camera 140 can be mainly used for imaging scenery and a person on a front side. In addition, the inner camera 141 and the inner camera 142 can be mainly used as inner cameras for video calls or for taking a picture of oneself, so-called taking a selfie. In addition, the inner camera 143 is used as an authentication camera for releasing locking from a state in which a screen of the mobile information terminal 100 is locked through fingerprint authentication or the like. The inner camera 141 and the inner camera 142 have different angles of view, and for example, the inner camera 142 has a wider angle as compared with the inner camera 141. Note that, in Fig. 1, although the inner camera 141, the inner camera 142, and the inner camera 143 are illustrated, depending on a configuration of the mobile information terminal 100, for example, only the inner camera 141 may be used, and the number of inner cameras mounted, and a combination of inner cameras mounted is not limited.

The inner camera 141, the inner camera 142, and the inner camera 143 have a structure to be embedded on a rear side of the display element of the display 117 as to be described below.

Images captured by the outer camera 140, the inner camera 141, the inner camera 142, and the inner camera 143 are recorded in the storage 125. Recording of the image is controlled by the controller 114 in accordance with a camera control program recorded in the storage 125.

In addition, the controller 114 performs control of setting images acquired by the outer camera 140, the inner camera 141, the inner camera 142, and the like, and image data (a record, a message, or the like) stored in the storage 125 or the like in the image superimposition processing unit 118, and displaying the images and the image data on the display 117 in a superimposed manner.

The voice input/output unit 160 inputs and outputs a voice input signal from the microphone 161 provided in the mobile information terminal 100, and a voice output signal to the speaker 162, and volume control of the voice input/output is performed by the controller 114.

The switch input unit 150 receives switch information in response to an operation of the physical button 151, and the switch information is transmitted to the controller 114 via the bus 101, and is used for control of various application programs as necessary.

As an example, the switch information is used for voice output magnitude adjustment, that is, volume up-down control in correspondence with two buttons of the button 151. Note that, the number of buttons 151 may be one or more.

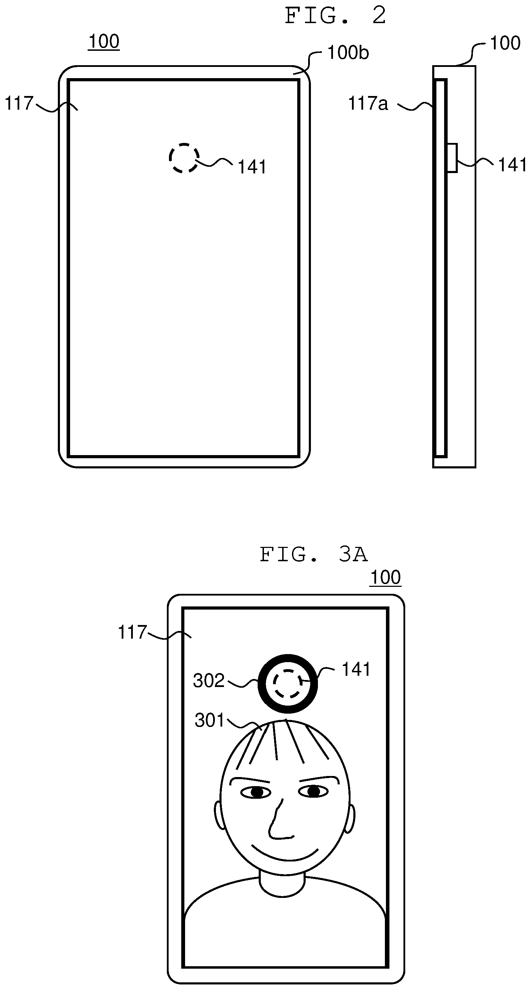

Fig. 2 is a view illustrating a structure of the mobile information terminal in this example, a left view is a plan view, and a right view is a side view.

In Fig. 2, the mobile information terminal 100 has a structure including the inner camera 141 embedded on a rear side of a display element 117a constituting the display 117. In this configuration, it is possible to reduce a bezel 100b (a so-called frame portion) of the mobile information terminal 100, and it is possible to enlarge a display screen. In this way, a deterioration of an output image of the inner camera 141, which is caused by embedding the inner camera 141 in the display 117, is reduced by employing a special arrangement of the display element constituting the display and a circuit arrangement, image processing by software, and the like so that a difference with a surrounding screen is reduced.

Here, as compared with the case where the inner camera 141 is disposed at a portion of the bezel 100b, in a mobile information terminal having a configuration in which an inner camera is embedded in a display, since the embedded inner camera may not be visually recognized or difficult to recognize, there is a problem that a user cannot grasp a position of the inner camera, and does not know where to look when taking a selfie. To solve the problem, hereinafter, description will be given of display control in this example.

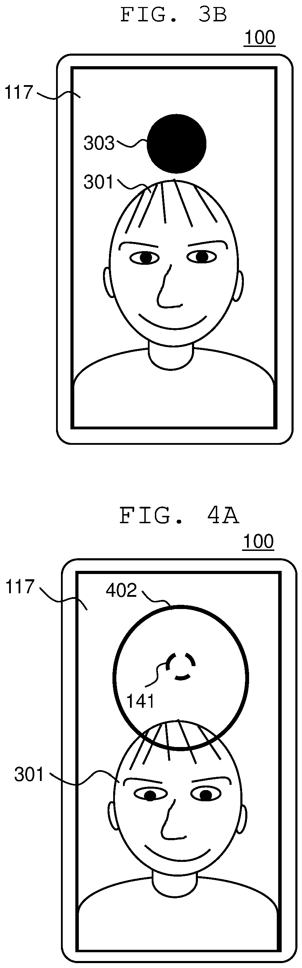

Fig. 3A and Fig. 3B are display examples when taking a selfie with the mobile information terminal in this example. Fig. 3A illustrates, in the display 117, a state in which a mark 302 that is a predetermined image is superimposed and displayed at a position where the inner camera 141 is embedded by using the image superimposition processing unit 118 described in Fig. 1. In Fig. 3A, the mark 302 indicates a region of the display 117 corresponding to a region including an imaging range of the inner camera 141. In this way, since the position of the inner camera is displayed by the mark 302, a user 301 who is taking a selfie by using the mobile information terminal 100 can visually recognize a location of the inner camera 141 that is embedded and is difficult to visually recognize, and it is easy to direct a line of sight toward the inner camera 141.

Fig. 3B is an example in which a blackout mark 303 is displayed instead of the mark 302 shown in Fig. 3A. That is, the blackout mark 303 is obtained by filling a region including the imaging range of the inner camera 141 which is indicated by the mark 302 in the display 117 with the same black image data. The blackout mark 303 is expected to have an effect of preventing light from being leaked from the display 117 to imaging pixels of the inner camera 141. Note that, since the inner camera receives light from a gap of the display element constituting the display, there is no influence on an image captured by the inner camera due to the blackout mark 303. In addition, the mark 303 may be a different color instead of black.

In addition, in a case of Fig. 3A and Fig. 3B, when displays other than the mark are displayed on the display 117 in a single high-luminance color (for example, single white color) for the purpose of illuminating a user's face, the user's face is illuminated with light from the display 117, and an effect of being clearly visible to the inner camera 141 can be expected.

In this way, according to this example, since a position of a camera is displayed on a display, and a line of sight can be guided to be easily directed toward the camera, a deviation of a line of sight of a user can be prevented, and a mobile information terminal that is easy for a user to use can be provided.

### Example 2

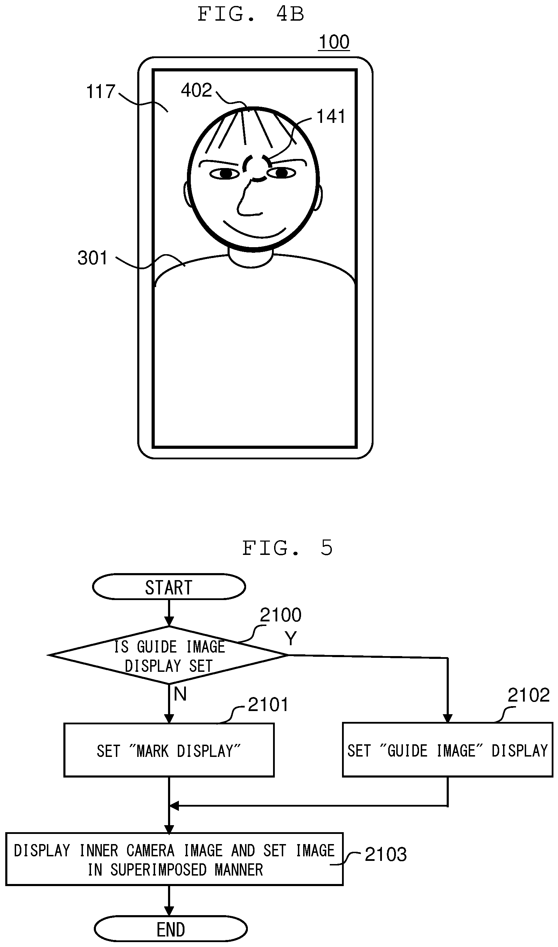

Fig. 4A and Fig. 4B are display examples when taking a selfie with a mobile information terminal in this example. Fig. 4A illustrates an aspect in which a result obtained by imaging the user 301, who is taking a selfie by using the mobile information terminal 100, with the inner camera 141 is displayed on the display 117. Note that, the inner camera 141 is in a state that is not visually recognized for the user 301. Here, furthermore, a guide image 402 is displayed on the display 117 in a superimposed manner by using the image superimposition processing unit 118. The guide image 402 guides a facial position of the user 301 so that a line of sight matches a position of the inner camera 141. According to such display control, the user 301 moves the mobile information terminal 100 and takes a posture so that the user 301 is reflected at a position of the guide image 402. As a result, as illustrated in Fig. 4B, a captured image in which the line of sight is directed to the inner camera 141 side can be obtained.

Fig. 5 is a flowchart of display control when an inner camera is selected in the mobile information terminals according to Example 1 and Example 2. That is, in a case where the inner camera 141 is selected when taking a selfie, control performed the controller 114 is performed depending on the setting as to whether to display the mark in Fig. 3A or Fig. 3B, or to display the guide image in Fig. 4A.

In Fig. 5, in step 2100, it is determined that display setting when taking a selfie is the image guide 402 (Fig. 4A), the setting is made to display the guide image 402, data for displaying a guide image is set to the image superimposition processing unit 118 (step 2102). In step 2100, it is determined the display setting when taking a selfie is not the guide image, data for displaying the mark 302 (Fig. 3A) or the mark 303 (Fig. 3B) to the image superimposition processing unit 118 (step 2101). Whether to use the mark 302 or the mark 303 may be set to the mobile information terminal 100 at the time of shipment, or may be set by the user 301. In addition, in step 2103, an image captured by the inner camera 141 and data of the image superimposition processing unit 118 are superimposed and displayed. That is, an image processing step of displaying a captured image of a user, a program image generation step of generating a mark and/or a guide image, and a superimposition image generation step of superimposing and displaying the image generated in the image processing step and the mark and/or the guide image generated in the program image generation step at a position on a display which corresponds to a position where an inner camera is embedded are included, and an image to be superimposed and displayed on the captured image is selected and displayed depending on whether display setting when taking a selfie is image guide or mark display.

Note that, Fig. 5 shows the flowchart of the display control corresponding to both Example 1 and Example 2, but the flowchart of the display control is not limited thereto, and may correspond to either Example 1 or Example 2. In this case, processing is performed in step 2101 and step 2103 (a case of only Example 1), or step 2102 and step 2103 (a case of only Example 2).

In this way, according to this example, display is controlled so that a line of sight is easily directed to a direction intended by a user, and thus a deviation of a line of sight of a user can be prevented, and a mobile information terminal that is easy for a user to use can be provided.

### Example 3

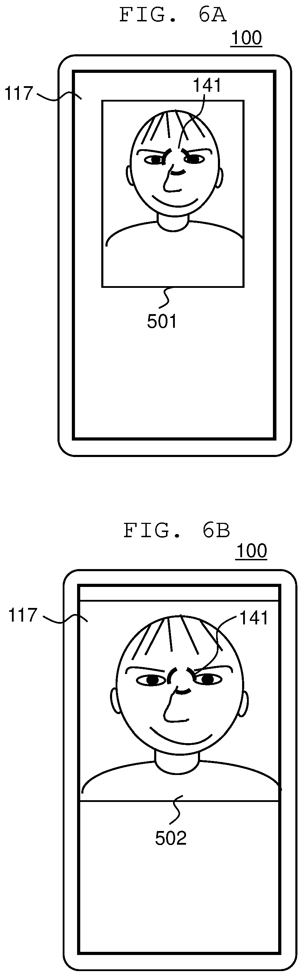

Fig. 6A and Fig. 6B are display examples when taking a selfie with a mobile information terminal in this example. Fig. 6A illustrates a state in which an eye portion of a selfie image 501 that is a captured image obtained by imaging a user who is taking a selfie with the inner camera 141 is detected in imaging processing by the controller 114, and the selfie image 501 is reduced and displayed so that a position in an eye-height direction or a midpoint (hereinafter, referred to as an eye position) between both eyes in the selfie image 501 is located at a position of the inner camera 141 embedded in the display 117.

Fig. 6B illustrates a state in which an eye portion of a selfie image 502 that is a captured image obtained by imaging a user who is taking a selfie with the inner camera 141 is detected in imaging processing by the controller 114, and the selfie image 502 is displayed by moving a display position thereof so that the eye position of the selfie image 502 is located at a position of the inner camera 141 embedded in the display 117.

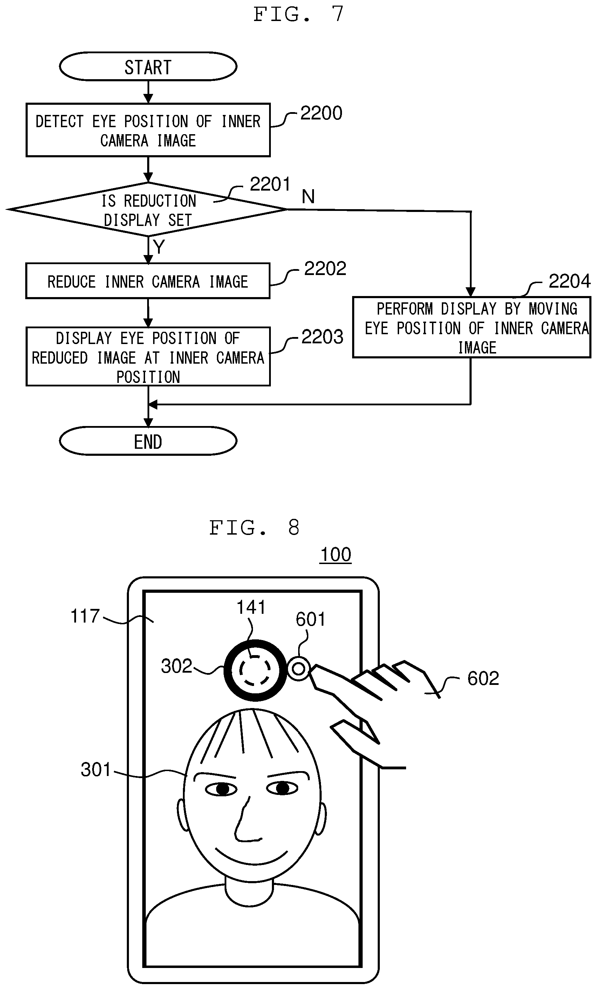

Fig. 7 is a flowchart of display control in which the display shown in Fig. 6A and Fig. 6B is performed by the controller 114. In Fig. 7, when a selfie mode of a camera application is activated by a user, in step 2200, a process of detecting the eye position of the selfie image 501 captured by the inner camera 141 is performed by image processing by the controller 114. A method of detecting the eye position is not particularly limited. In addition, in step 2201, it is determined whether setting is made to a reduction display mode or a movement display mode. Although not illustrated in the drawing, it is assumed that setting of the reduction display mode and the movement display mode is performed on an additional setting screen by a user.

In a case where setting is made to the reduction display mode, in step 2202, the selfie image 501 captured by the inner camera 141 is reduced, and in step 2203, reduction display is performed so that the eye position of the reduced image is located at the position of the inner camera 141 embedded in the display 117 as illustrated in Fig. 6A.

In step 2201, in a case where it is determined that setting is made to the movement display mode, the selfie image 501 is displayed by moving a display position so that the eye position of the selfie image 501 captured by the inner camera 141 is located at the position of the inner camera 141 embedded in the display 117 as illustrated in Fig. 6B.

In this way, according to this example, since display control of the captured image is performed so that the eye position of the user is located at the position of the inner camera 141 which is actually difficult to visually recognize, a deviation of a line of sight of a user can be prevented, and a mobile information terminal that is easy for the user to use can be provided.

Note that, in this example, it is assumed that the user can set the reduction display mode and the movement display mode, but there is no limitation thereto, and either the reduction display mode or the movement display mode may be limited at the time of shipment of the mobile information terminal 100. In this case, processing is performed in step 2200, step 2202, and step 2203 (a case of only the reduction display mode), or step 2200 and step 2204 (a case of only the movement display mode).

In addition, in the example, description has been given of an example in which the eye position of the selfie image 501 is detected, and the position is brought to be located to the position of the inner camera 141 embedded in the display 117, but display may be performed at a position determined in advance to be located on the inner camera 141 without the process of detecting the eye position of the selfie image 501. At this time, eye position detection is not performed with the image processing, and thus there is an effect of reducing a processing load of the controller 114.

### Example 4

Fig. 8 is a display example when taking a selfie with a mobile information terminal in this example. Fig. 8 illustrates an example in which a shutter button 601 is displayed in the vicinity of the mark 302. As in the mark 302, the shutter button 601 is also superimposed and displayed on an image from the inner camera 141 by the image superimposition processing unit 118.

When performing the display processing, it is easy for a user to operate the shutter button 601 displayed in the vicinity of the mark 302 while viewing the mark 302, and even when a line of sight of the user is directed toward the shutter button 601 when operating the shutter button 601 with a hand 602 of the user, the line of sight can be prevented from being significantly deviated from the line of sight toward the inner camera 141.

### Example 5

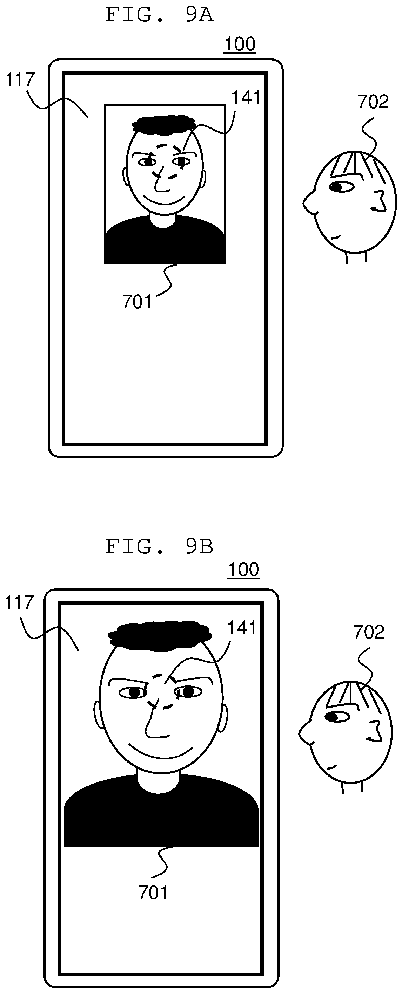

Fig. 9A and Fig. 9B are display examples of a partner image during communication with a mobile information terminal in this example.

Fig. 9A is a display example of a communication partner image 701 that is communicating (video chat or the like) with a user 702 in the mobile information terminal 100. Fig. 9A illustrates a state in which an eye portion of the received communication partner image 701 is detected in image processing by the controller 114, and reduction display is performed so that the eye position of the image is located at the position of the inner camera 141 embedded in the display 117. For convenience of illustration, the face of the user 702 is drawn sideways, but it is assumed that actually, the display 117 of the mobile information terminal 100 and the user 702 are directly facing each other.

Fig. 9B is a display example of the communication partner image 701 as in Fig. 9A, but illustrates a state in which an eye portion of the communication partner image 701 is detected in the image processing by the controller 114, for example, a width of the communication partner image 701 is set to match a horizontal width of the display 117, and movement display is performed so that an eye position is located at the position of the inner camera 141 embedded in the display 117.

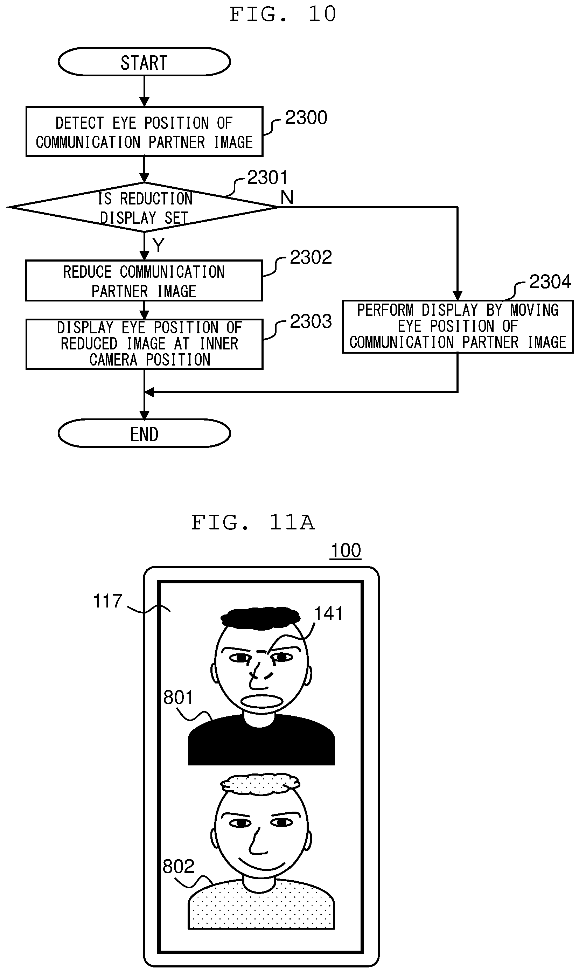

Fig. 10 is a flowchart of display control of the communication partner image in the mobile information terminal in this example, and illustrates a procedure performed by the controller 114 in Fig. 9A and Fig. 9B. In Fig. 10, when a video chat application is activated by the user 702, in step 2300, a process of detecting an eye position of the communication partner image 701 by image processing is performed by the controller 114. A method of detecting the eye position is not particularly limited. In addition, in step 2301, it is determined whether setting is made to the reduction display mode or the movement display mode. Although not illustrated in the drawing, it is assumed that setting of the reduction display mode and the movement display mode is performed on an additional setting screen by a user.

In a case where setting is made to the reduction display mode, in step 2302, the communication partner image 701 is reduced, and in step 2303, reduction display is performed so that an eye position of the reduced image is located at the position of the inner camera 141 embedded in the display 117 as illustrated in Fig. 9A.

In step 2301, in a case where it is determined that setting is made to the movement display mode, in step 2304, display is performed by moving a display position so that the eye position of the communication partner image 701 is located at the position of the inner camera 141 embedded in the display 117.

As described above, according to this example, since the user 702 naturally looks at the eye position of the communication partner image 701, the user 702 easily directs a line of view toward the inner camera 141 side, and thus there is an advantage that the communication partner also feels as if the eyes of the user 702 are directed toward the communication partner during video chat, and video chat can be performed in a more natural manner.

Note that, in the example, description has been given of an example in which the eye position of the communication partner image 701 is detected, and the eye position is located at the position of the inner camera 141 embedded in the display 117, but display may be performed at a position determined in advance to be located on the inner camera 141 without the process of detecting the eye position of the communication partner image 701. At this time, eye position detection is not performed with the image processing, and thus there is an effect of reducing a processing load of the controller 114.

### Example 6

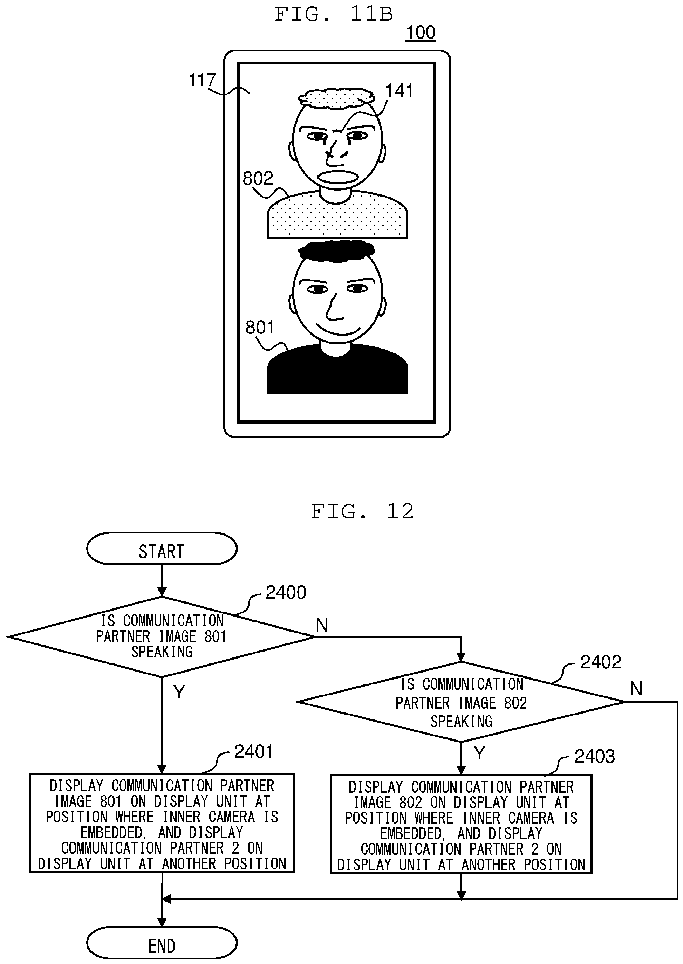

Fig. 11A and Fig. 11B are display examples of a partner image during communication of a mobile information terminal in this example.

Fig. 11A and Fig. 11B illustrate a state in which in the mobile information terminal 100, a communication partner image 801 and a communication partner image 802 which are received are displayed when the user 702 (directly facing the display 117 of the mobile information terminal 100 as in Fig. 9A and Fig. 9B although not illustrated in the drawings) and a plurality of communication partners perform communication (video chat or the like). Image sizes of the received communication partner image 801 and the communication partner image 802 which are received are enlarged or reduced as necessary so that both the images can be displayed within a range of the display 117, or the images are displayed as is in their image sizes. In Fig. 11A, the communication partner image 801 of a communication partner who is speaking is displayed to be located at the position of the inner camera 141 embedded in the display 117, and the communication partner image 802 of a communication partner who is not speaking is displayed at a location other than the position. In Fig. 11B, contrary to Fig. 11A, the communication partner image 802 of a communication partner who is speaking is displayed to be located at the position of the inner camera 141 embedded in the display 117, and the communication partner image 801 of a communication partner who is not speaking is displayed at a location other than the position.

Fig. 12 is a flowchart of display control of the communication partner images in the mobile information terminal in this example, and illustrates a procedure of the controller 114 that performs the display control described in Fig. 11A and Fig. 11B.

In Fig. 12, in step 2400, it is determined whether the received communication partner image 801 is speaking, if so, the communication partner image 801 is appropriately enlarged or reduced, or converted in an image size thereof to be located at the position of the inner camera 141, and is controlled to be displayed on the display 117 in step 2401.

In step 2400, in a case where it is determined that the communication partner image 801 is not speaking, in step 2402, it is determined whether the communication partner image 802 is speaking, if so, in step 2403, the communication partner image 802 is appropriately enlarged or reduced or converted in a size thereof to be located at the position of the inner camera 141, and is controlled to be displayed on the display 117.

Note that, detection as to whether the communication partner image 801 and the communication partner image 802 are speaking may be performed by using a result that is detected on a video chat server side and is transmitted through communication, or may be performed by the controller 114 by using voice data received by the mobile information terminal 100.

In step 2402, in a case where it is determined that the communication partner image 802 is not speaking, the processing is terminated as is without updating control of the display position of the communication partner image 801 and the communication partner image 802.

In addition, when displaying the communication partner image 801 or the communication partner image 802 in step 2401 or step 2403 at the position where the inner camera 141 is embedded, an eye position of the communication partner images employed in step 2300 in Fig. 10 is detected, and display control may be performed by the processing used in step 2303 or step 2304.

As described above, according to this example, since the line of sight of the user 301 is always directed toward a communication partner who is speaking, video chat can be performed with the communication partner with a very natural line of sight.

### Example 7

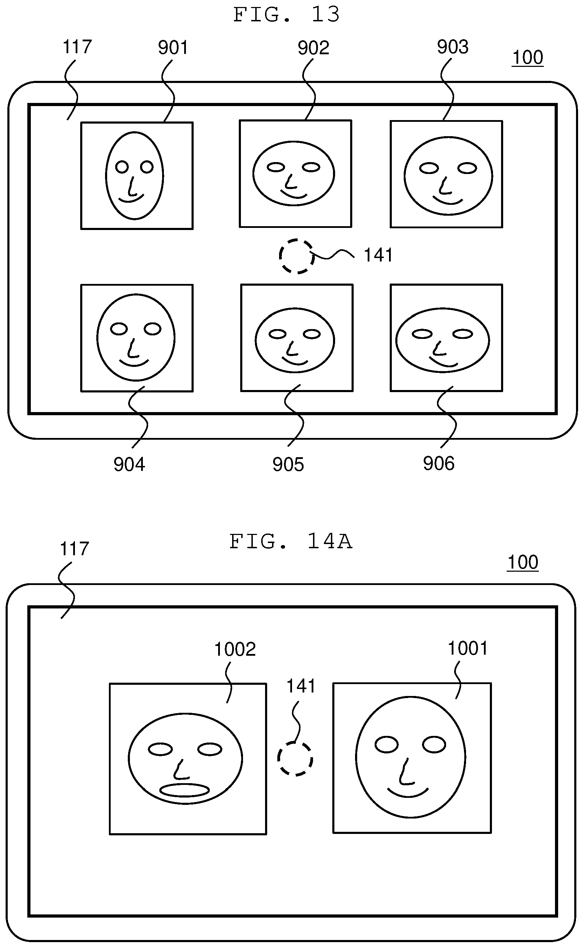

Fig. 13 is a display example of a partner image during communication of a mobile information terminal in this example, and illustrates an example of display control when there are even more communication partners as compared with the case described in Fig. 11A and Fig. 11B.

Fig. 13 shows a case where, for example, a user of the mobile information terminal 100 is a lecturer, communication partners are six students, and the inner camera 141 is embedded and disposed in the center of the display 117. As shown in Fig. 13, the plurality of communication partner images 901 to 906 are displayed at the periphery of the position of the inner camera 141.

This type of display control is particularly suitable when the mobile information terminal 100 is a personal computer or a tablet, and the lecturer who is the user of the mobile information terminal 100 can confirm respective images of the students who are the communication partners without significantly changing a line of sight. In addition, since the line of sight of the lecturer is not significantly changed, the students can attend the lecture with a sense of a natural lecture call.

### Example 8

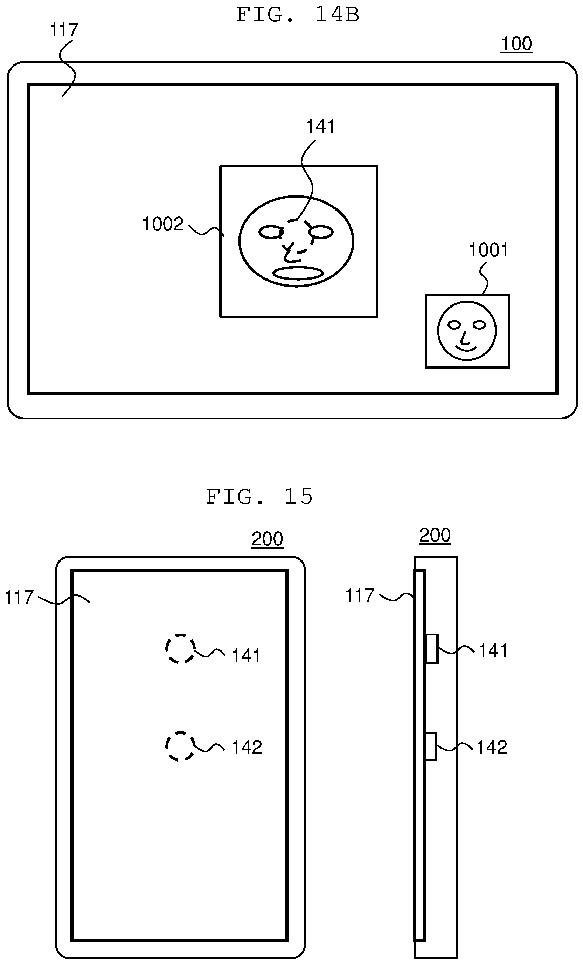

Fig. 14A and Fig. 14B are display examples of a communication partner image and a communication source image in a mobile information terminal in this example, and illustrate a case where, for example, a user of the mobile information terminal 100 is a lecturer, communication partners are a plurality of students, and the inner camera 141 is embedded and disposed in the center of the display 117. In addition, Fig. 14A and Fig. 14B show an aspect in which a received image 1002 of a speaking student who is a communication partner, and a transmitted image 1001 obtained by imaging the lecturer with the inner camera 141 are displayed.

In Fig. 14A, the received image 1002 and the transmitted image 1001 are displayed with the inner camera interposed therebetween. When display control is performed in this way, since a line of sight of the lecturer is directed toward the inner camera, the student can attend a lecture with a sense of a natural lecture call.

Fig. 14B illustrates an aspect in which the received image 1002 of the speaking student who is a communication partner is displayed at a position where the inner camera is embedded, and the transmitted image 1001 is displayed at a location other than the embedded position of the inner camera (may not be displayed) . When display control is performed in this way, since the lecturer naturally views the face of the student, the line of sight of the lecturer is directed to the inner camera 141, and the student can attend a lecture with a sense of a natural lecture call.

Note that, when displaying the received image 1002 in Fig. 14B at the embedded position of the inner camera 141, the eye position of the communication partner image used in step 2300 in Fig. 10 may be detected, and display control may be performed in the processing used in step 2303 or step 2304.

### Example 9

Fig. 15 is a structure view of an under display inner camera of a mobile information terminal in this example, a left view is a plan view, and a right view is a side view.

As illustrated in Fig. 15, in this example, a mobile information terminal 200 is mounted with two cameras including the inner camera 141 and the inner camera 142, and the cameras are embedded in the display 117. For example, the inner camera 142 is a camera with a wider angle of view as compared with the inner camera 141.

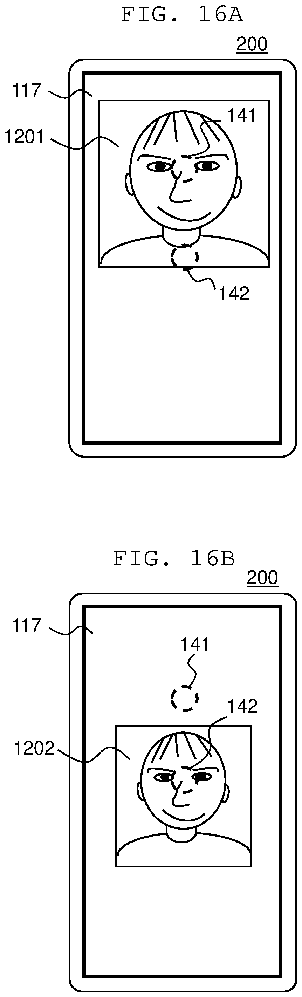

Fig. 16A and Fig. 16B are views illustrating display examples when taking a selfie with the mobile information terminal 200 in this example, and illustrate a display control aspect in which a display position is changed in correspondence with the two inner cameras which are used by a user when taking a selfie.

In Fig. 16A, a selfie image 1201 when the user takes a selfie by using the inner camera 141 is displayed at a position where the inner camera 141 is embedded. That is, display is performed so that a position of the inner camera 141 is located in the vicinity of the center of the selfie image 1201.

In Fig. 16B, the selfie image 1202 when the user takes a selfie by using the inner camera 142 is displayed at a position where the inner camera 142 is embedded. That is, display is performed so that the position of the inner camera 142 is located in the vicinity of the center of the selfie image 1202.

Note that, when displaying the selfie image 1201 or the selfie image 1202 in Fig. 16A and Fig. 16B at the embedded position of the inner camera 141 or the inner camera 142, the eye position in the processing used in step 2200 in Fig. 7 may be detected, and display control may be performed in the processing used in step 2201 to step 2204.

According to this example as described above, since a user naturally shifts a line of sight toward the inner camera side, a selfie image with a natural line of sight can be obtained.

### Example 10

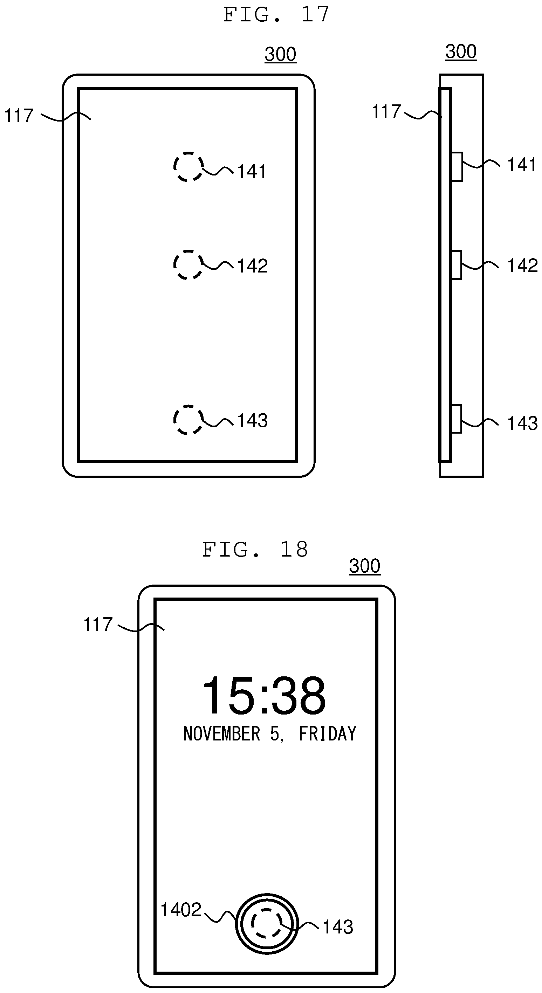

Fig. 17 is a structure view of an under display inner camera of a mobile information terminal in this example, a left view is a plan view, and a right view is a side view.

As illustrated in Fig. 17, in this example, a mobile information terminal 300 is mounted with three cameras including the inner camera 141, the inner camera 142, and the inner camera 143, and the cameras are embedded in the display 117. For example, the inner camera 142 is a camera with a wider angle of view as compared with the inner camera 141, and the inner camera 143 is a camera that is used in fingerprint authentication or another biometric authentication.

Fig. 18 is a view illustrating a lock screen of the mobile information terminal 300 in this example. Locking of the lock screen is a function that automatically locks the mobile information terminal 300 to prevent a third party from operating the mobile information terminal 300 when the mobile information terminal 300 turns off a screen once. Typically, this locked state can be released by inputting a password code or by performing biometric authentication such as a fingerprint. In the mobile information terminal 300 in Fig. 18, as described in Fig. 17A and Fig. 17B, the inner camera 143 is embedded in the display 117 as a camera for the biometric authentication. As illustrated in Fig. 18, in this example, a mark 1402 indicating a location where the inner camera 143 is embedded in lock screen display is displayed.

As described above, according to this example, there is an effect in which the user of the mobile information terminal 100 can easily grasp a position where a finger for performing the biometric authentication is to be placed at the time of the lock screen display due to the mark 1402.

### Example 11

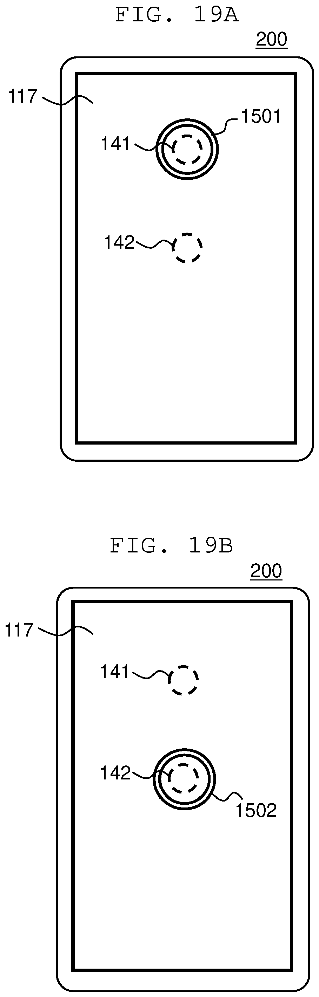

Fig. 19A and Fig. 19B are views illustrating a screen display example of a mobile information terminal in this example. In this example, description will be given on the assumption that the mobile information terminal 200 is mounted with two cameras including the inner camera 141 and the inner camera 142 shown in Fig. 15, and the cameras are embedded in the display 117.

Fig. 19A illustrates an example in which a mark 1501 is displayed on the display 117 in a case where setting is made to use the inner camera 141 when a camera application is activated. Fig. 19B illustrates an example in which a mark 1502 is displayed on the display 117 in a case where setting is made to use the inner camera 142 when the camera application is activated.

In this way, according to this example, there is an effect of grasping that the user of the mobile information terminal 200 can graph which an inner camera is being used.

Note that, if it is possible to separately select whether an inner camera to be used is set to the mark 1501 or the mark 1502 with a selection menu (not illustrated) , it is not necessary to perform an operation of selecting the inner camera when activating the camera application.

### Example 12

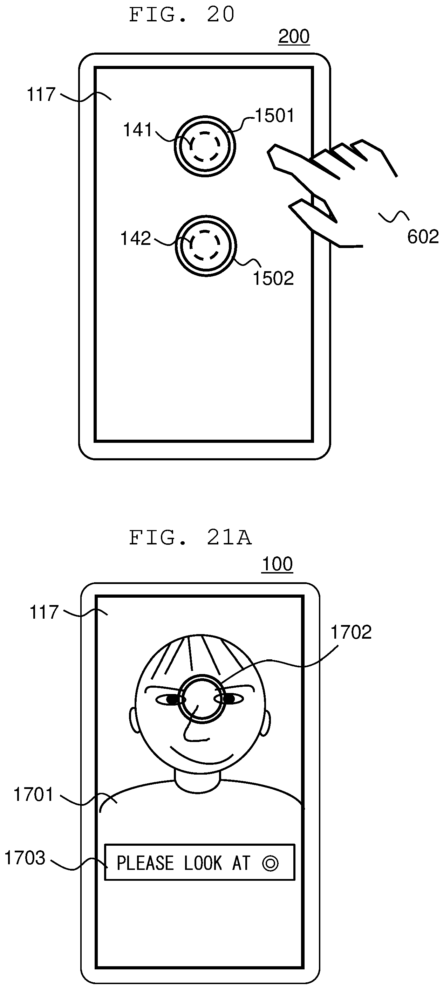

Fig. 20 is a view illustrating a screen display example when activating a camera application of a mobile information terminal in this example. In this example, description will be given on the assumption that the mobile information terminal 200 is mounted with two cameras including the inner camera 141 and the inner camera 142 as shown in Fig. 15, and the cameras are embedded in the display 117.

As illustrated in Fig. 20, in this example, when activating the camera application, the mark 1501 and the mark 1502 are displayed simultaneously so that the user can select whether to use the inner camera 141 or the inner camera 142 as an inner camera when taking a selfie.

As described above, according to this example, the user can conveniently select the inner camera to be used by a tap operation whenever the camera application is activated.

### Example 13

In this example, description will be given of guidance display when taking a selfie with a mobile information terminal. Note that, in this example, description will be given on the assumption that the mobile information terminal 100 that is mounted with the inner camera 141 as shown in Fig. 2, and the inner camera 141 is embedded in the display 117, but there is not limitation to the number of mounted inner cameras. In addition, the distance sensor 137 is provided on the same surface side of the inner camera 141 of the mobile information terminal. The distance sensor 137 is capable of measuring a shape of an object by measuring a distance to the object at a plurality of points.

Fig. 21A is a display example of guidance display in an ID photo mode when taking a selfie with the mobile information terminal in this example. Here, the ID photo mode is a selfie photographing mode suitable for photographing an ID photo.

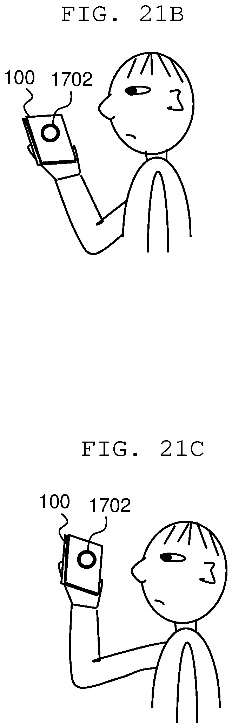

As illustrated in Fig. 21A, in the guidance display in the ID photo mode in this example, a user image 1701 when taking a selfie, a mark 1702 for grasping a position of the inner camera 141 (not illustrated), and a message 1703 for prompting the user to take an action are displayed. At this time, in the ID photo mode, when assuming that a state in which a user's face and the mobile information terminal face each other directly is set as an optical relationship, in a case of a positional relationship between the user and the mobile information terminal 100 as illustrated in Fig. 21B, although a line of sight is directed, but the mobile information terminal 100 and the user do not face each other directly. Therefore, the line of sight is lowered, and this results in a poor image that gives an impression of looking down. Therefore, a posture of the mobile information terminal is measured by using the acceleration sensor 133, the gyro sensor 136, and the like, the positional relationship between the user's face and the mobile information terminal is measured by using the distance sensor 137, and the mobile information terminal 100 displays a message for prompting the user to move the mobile information terminal to an optical position. In addition, in a case where it is determined that the user's face and the mobile information terminal face each other directly as shown in Fig. 21C, the mobile information terminal 100 displays a message for prompting photographing. In this way, when the mobile information terminal displays a message for guiding the mobile information terminal to an optical position toward the user, since the user directs the line of sight toward the inner camera 141 at an optimal positional relationship with the mobile information terminal, it is possible to capture an image in a state suitable for the ID photo.

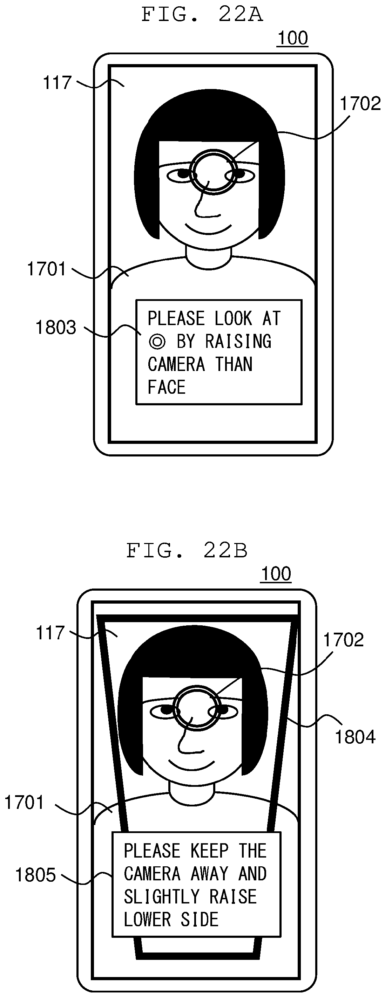

Fig. 22A is a display example of guidance display in an upturned eye mode when taking a selfie with the mobile information terminal in this example. Here, the upturned eye mode is a selfie photographing mode suitable when taking a selfie with upturned eyes that is one of cute expressions.

As illustrated in Fig. 22A, in the guidance display in the upturned eye mode in this example, the user image 1701 when taking a selfie, the mark 1702 for grasping the position of the inner camera 141 (not illustrated), and a message 1803 for promoting the user to take an action are displayed. The positional relationship between the mobile information terminal and the user's face is measured in a similar manner as described in Fig. 21B. When displaying the message in this way, since the line of sight is directed toward the inner camera 141 in a state of raising the mobile information terminal 100 to a position higher than the face, the user can be prompted to perform photographing suitable for taking a selfie with an upturned line of sight.

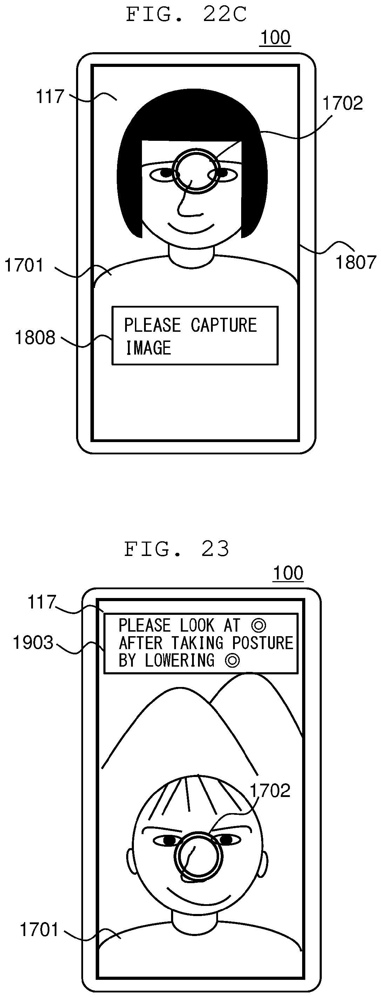

Fig. 22B is an example in which a guide frame 1804 of the screen is displayed in addition to a message 1805 in the upturned eye mode in this example. The user can guide the position of the mobile information terminal to an optimal direction by moving so that the guide frame 1804 matches the screen. Fig. 22C illustrates a case where the mobile information terminal is located at an optimal position in the upturned eye mode in this example. In Fig. 22C, a guide frame 1807 approximately matches the screen. In this case, a message 1808 for prompting photographing is displayed. Note that, the guide frame may not match the screen, and the guide frame may be guided to approach a target position by displaying the target position on an inner side of the screen. In addition, when moving the mobile information terminal, up and down arrows or the like may be displayed in order for the user to easily understand a movement direction.

Fig. 23 is a display example of the guidance display in a background mode when taking a selfie with the mobile information terminal in this example. Here, the background mode is a selfie photographing mode suitable for a case of desiring to photograph the background as well when taking a selfie.

As illustrated in Fig. 23, in the guidance display in the background mode in this example, the user image 1701 when taking a selfie, a mark 1702 for grasping the position of the inner camera 141 (not illustrated), and a message 1903 for prompting the user to take an action are displayed. When the message is displayed in this way, since the user makes an operation so that the background when taking a selfie is included on an upper side, it is possible to capture a selfie image including the background. Note that, in order to enlarge a region for including the background when taking a selfie on an upper side of the user, for example, photographing may be performed by using the inner camera 142 disposed on a lower side of the inner camera 141 as shown in Fig. 15.

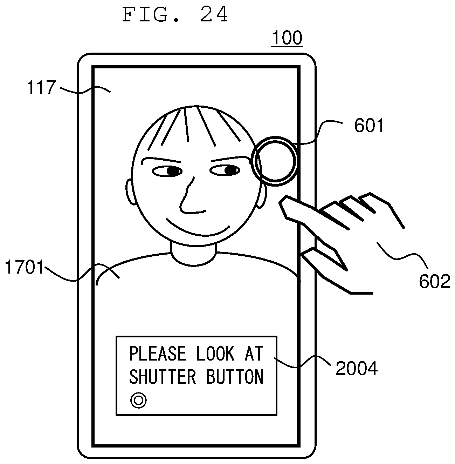

Fig. 24 is a display example of the guidance display in a line-of-sight shift mode when taking a selfie with the mobile information terminal in this example. Here, the line-of-sight shift mode is a selfie photographing mode suitable for a case where the user desires to take a photograph in a state in which the line of sight is shifted when taking a selfie.

As illustrated in Fig. 24, in the guidance display in the line-of-sight shift mode in this example, the user image 1701, a shutter button 601 at a position deviated from the position of the inner camera 141 (not illustrated), a user's operating hand 602, and a message 2004 for prompting the user to take an action are displayed. When the message is displayed in this way, since the user looks at the shutter button 601 side when taking a selfie, the user can take a photograph in a state in which the line of sight is shifted from the camera, and the user can perform an operation while looking at the shutter button 601.

Although not illustrated in the drawing, the "ID photo mode", the "upturned eye mode", the "background mode", and the "line-of-sight shift mode" are selected by the user on a selfie mode setting screen.

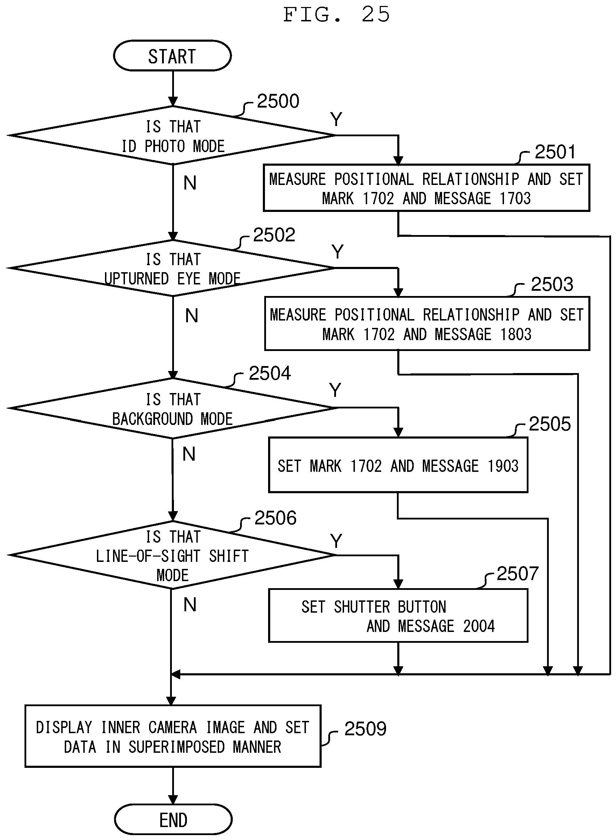

Fig. 25 is a flowchart when controlling a display image depending on the selfie mode in the mobile information terminal in this example, and illustrates a procedure when the display control is performed by the controller 114.

In Fig. 25, in step 2500, in a case where it is determined that the selfie mode is the "ID photo mode", the positional relationship is measured in step 2501, display data of the mark 1702 and the message 1703 is set to the image superimposition processing unit 118. In addition, in step 2509, an image captured with the inner camera 141 and the data set to the image superimposition processing unit 118 are displayed in a superimposed manner.

In step 2502, in a case where it is determined that the selfie mode is the "upturned eye mode", the positional relationship is measured in step 2503, display data of the mark 1702 and the message 1803 is set to the image superimposition processing unit 118. In addition, in step 2509, an image captured by the inner camera 141 and the data set to the image superimposition processing unit 118 are displayed in a superimposed manner.

In step 2504, in a case where it is determined that the selfie mode is the "background mode", in step 2505, display data of the mark 1702 and the message 1903 is set to the image superimposition processing unit 118. In addition, in step 2509, an image captured with the inner camera 141 and the data set to the image superimposition processing unit 118 are displayed in a superimposed manner.

In step 2506, in a case where it is determined that the selfie mode is the "line-of-sight shit mode", in step 2507, display data of the shutter button 601 and the message 2004 is set to the image superimposition processing unit 118. In addition, in step 2509, an image captured with the inner camera 141 and the data set to the image superimposition processing unit 118 are displayed in a superimposed manner.

In step 2506, in a case where it is determined that the selfie mode is not the "line-of-sight shift mode", since any of the "ID photo mode", the "upturned eye mode", the "background mode", and the "line-of-sight shift mode" which are selfie modes is not set, in step 2509, an image captured with the inner camera 141 and the data (no image superimposition display state) set to the image superimposition processing unit 118 are displayed in a superimposed manner with the image superimposition processing unit data as an empty state (no display state).

In addition, in Fig. 25, description has been given of a case where the selfie mode includes four modes described in the examples, but there is no limitation thereto, and the selfie mode may be one mode or any combination of the modes.

Hereinbefore, examples have been described, but the invention is not limited to the examples described above, and includes various modification examples. For example, in the above-described examples, description has been given of a case where the number of the inner cameras mounted of the mobile information terminal is one, two, three, or the like, but there is no limitation thereto. In addition, the examples have been described in detail for easy understanding of the invention, and are not limited to those including all of the configurations described above. In addition, a part of the configurations of any example can be substituted with a configuration of another example, and a configuration of another example can also be added to the configurations of any example. In addition, with respect to a part of the configurations of the respective examples, addition of another configuration, deletion, or substitution can be made. In addition, a part or the entirety of the above-described respective configurations may be configured by hardware, or may be configured to be realized by executing a program by a processor. In addition, control lines and information lines show those considered to be necessary for explanation, and not all control lines and information lines in the product are necessarily shown.

### REFERENCE SIGNS LIST

100, 200, 300 Mobile information terminal
114 Controller
115 Input means
117 Display
117a Display element
118 image superimposition processing unit
140 Outer camera
141 to 143 Inner cameras
301, 702 User
302, 303, 1402, 1501, 1502, 1702 Mark
402 Guide image
501, 502, 1201, 1202 Selfie image
601 Shutter button
701, 801, 802, 901 to 906 Communication partner images
1001 Transmitted image
1002 Received image
1701 User image
1703, 1803, 1805, 1808, 1903, 2004 Message
1804, 1807 Guide frame

## Claims

1. A mobile information terminal comprising:
a display;
an imager embedded in the display; and
a controller,
wherein the controller is configured to display a predetermined image at a position on the display which corresponds to a position of the imager.

2. The mobile information terminal according to claim 1,
wherein the controller is configured to display an image captured by the imager on the display, and display the predetermined image at the position on the display which corresponds to the position of the imager in a superimposed manner.

3. The mobile information terminal according to claim 2,
wherein the predetermined image is an image in which a region including an imaging range of the imager in the display is filled with the same image data.

4. The mobile information terminal according to claim 2,
wherein the predetermined image is a guide image indicating a position where a user's face captured by the imager is to be displayed.

5. The mobile information terminal according to claim 1,
wherein the predetermined image is a user's selfie image captured by the imager, and
the controller is configured to reduce or move the selfie image so that a position in an eye-height direction or a midpoint between both eyes in the selfie image is located at a position on the display which corresponds to the position of the imager, and display the selfie image on the display.

6. The mobile information terminal according to claim 2,
wherein the controller is configured to superimpose and display an image of a shutter button in the vicinity of the predetermined image.

7. The mobile information terminal according to claim 1, further comprising:
a transceiver,
wherein the predetermined image is an image of a communication partner by the transceiver, and
the controller is configured to reduce or move the image of the communication partner so that a position in an eye-height direction or a midpoint between both eyes in the image of the communication partner is located at a position on the display which corresponds to the position of the imager, and displays the image on the display.

8. The mobile information terminal according to claim 7,
wherein in a case where a plurality of the communication partners exist, the controller is configured to reduce or move an image of a communication partner who is speaking to a position on the display which corresponds to the position of the imager and displays the image on the display.

9. A mobile information terminal comprising:
a display;
an imager embedded in the display;
a transceiver; and
a controller,
wherein the imager is embedded and disposed in the center of the display, and
in a case where a plurality of communication partners by the transceiver exist, the controller is configured to display images of the plurality of communication partners in the vicinity of a position on the display which corresponds to the position of the imager.

10. The mobile information terminal according to claim 5,
wherein a plurality of the imagers are provided, and
the controller is configured to display a user's selfie image captured by an imager selected among the plurality of imagers at a position on the display which corresponds to a position where the selected imager is embedded.

11. The mobile information terminal according to claim 1,
wherein a plurality of the imagers are provided, and
when activating an application using an imager selected among the plurality of imagers, the controller is configured to display the predetermined image at a position on the display which corresponds to a position where the selected imager is embedded.

12. The mobile information terminal according to claim 11,
wherein the controller is configured to superimpose and display the predetermined image at each of positions on the display which correspond to positions where the plurality of imagers are respectively embedded at the time of activating the application.

13. The mobile information terminal according to claim 2,
wherein the image captured by the imager is a selfie image of a user, and
the controller is configured to display a message for prompting the user to take an action on the display.

14. The mobile information terminal according to claim 13,
wherein the message is guidance display when taking a selfie, and a selfie mode is any one of an ID photo mode, an upturned eye mode, a background mode, and a line-of-sight shift mode.

15. An image displaying method in a mobile information terminal in which an imager is embedded in a display, the method comprising:
an image processing step of displaying a captured image of a user or a communication partner;
a program image generation step of generating a mark and/or a message; and
a superimposed image generation step of superimposing and displaying the image generated in the image processing step and the mark and/or message generated in the program image generation step at a position on the display which corresponds to a position where the imager is embedded.
